Europäisches Patentamt

(19) European Patent Office

Office européen des brevets

(11) Publication number: **0 321 283**
**A1**

(12) **EUROPEAN PATENT APPLICATION**

(21) Application number: **88311943.0**

(22) Date of filing: **16.12.88**

(51) Int. Cl.⁴: **A 01 D 34/76**

(30) Priority: **18.12.87 GB 8729538**

(43) Date of publication of application:
**21.06.89 Bulletin 89/25**

(84) Designated Contracting States:
**AT BE CH DE FR GB IT LI NL SE**

(71) Applicant: **ELECTROLUX NORTHERN LIMITED**
**Hurworth Road Aycliffe Industrial Estate**
**Newton Aycliffe Co.Durham DL5 6UP (GB)**

(72) Inventor: **Bowden, Michael**
**14, Kirkham Close**
**Newton Aycliffe Co. Durham, DL5 4RS (GB)**

(74) Representative: **Arthur, Bryan Edward et al**
**Withers & Rogers 4 Dyer's Buildings Holborn**
**London EC1N 2JT (GB)**

(54) **Rotary mower.**

㊗ This invention relates to rotary mowers and relates particularly but not exclusively to hover mowers of the type driven by an internal combustion engine. A rotatable cutter blade (10) is usually directly connected to a fan (8) and a power unit (5) and, unless the power unit is stopped when the mower is not in use (e.g. to remove and empty a grass collecting box) the blade is constantly rotated which presents a potential danger to the user. It is an object of the present invention to reduce such a potential danger and accordingly there is provided a rotary mower comprising a powered drive shaft (18), a driven shaft (11) carrying a rotary cutting blade (10), releasable coupling means arranged to couple the driven shaft to the drive shaft, biasing means (13) acting on the coupling means and tending to disengage the coupling between the drive shaft and driven shaft, and control means coupled to the coupling means so as to enable disengagement thereof to be prevented only when the mower is under the control of the use.

Fig.1.

## Description

## ROTARY MOWER

This invention relates to rotary mowers and relates particularly but not exclusively to hover mowers of the type driven by an internal combustion engine. Such hover mowers generally comprise a base in the form of an inverted dish having a powered fan mounted therein which support the mower by means of a cushion of air generated within the dish in accordance with the well known "hovercraft" principle. A rotatable cutting blade is supported on the same axis as the fan for rotation in a plane which is slightly above the plane of the mouth of the dish to cut the grass. The rotatable cutter is usually directly connected to the fan and power unit. Such direct connection results in the mower being a major hazard if it is left unattended with the engine operating, for instance to empty a removable grass collection bin. A safer alternative is to stop the engine each time the machine is left unattended. However, this results in premature wear to the engine components due to frequent restarting and also inconveniences a user.

It is an object of this invention to alleviate the above disadvantages.

According the the present invention there is provided a rotary mower comprising a powered drive shaft, a driven shaft carrying a rotary cutting blade, releasable coupling means arranged to couple the driven shaft to the drive shaft, biasing means acting on the coupling means and tending to disengage the coupling between the drive shaft and driven shaft, and control means coupled to the coupling means so as to enable disengagement thereof to be prevented only when the mower is under the control of the user. Preferably the control means is manually operable.

Such a failsafe arrangement has important safety advantages.

One embodiment of the invention will now be described by way of example, with reference to Figures 1 - 3 of the accompanying drawings, of which:-

Figure 1 is a side elevation, partly in cross-section, of a hover mower in accordance with the invention;

Figure 2 is a plan view of the underside of the main components of a clutch mechanism in the mower of Figure 1; and

Figure 3 is a plan view, similar to Figure 2, but showing the clutch mechanism in a disengaged position.

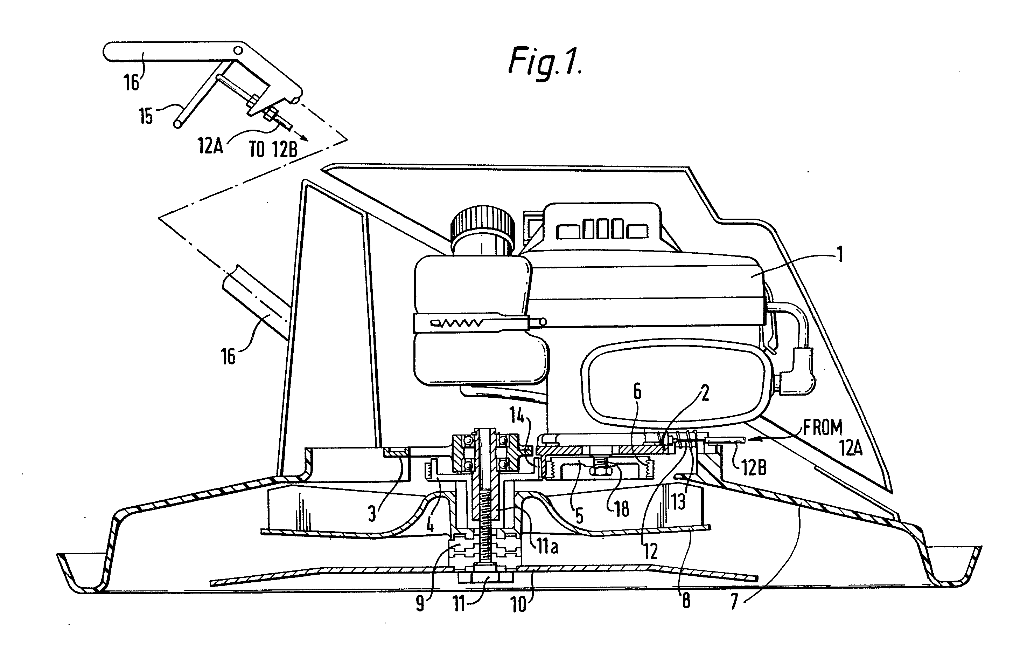

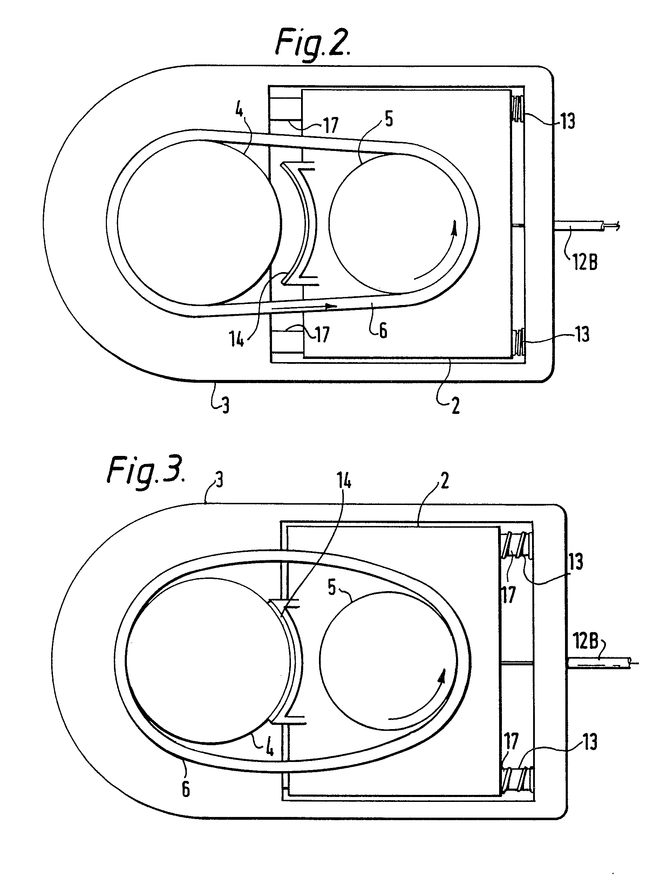

Referring to Figure 1, the hover mower has a deck 7 in the form of an inverted dish upon which a base plate 3 is mounted. As best seen in Figures 2 and 3, an engine support plate 2 is mounted on base plate 3 by means of guides 17 which allow the engine support plate 2 to slide backwards and forwards relative to the base plate 3. An internal combustion engine 1 is mounted on the support plate 2 and drives a drive shaft 18 on which a drive pulley 5 is mounted. A drive belt 6 couples the drive pulley 5 to a driven pulley 4 which is mounted on a driven shaft 11a which in turn carries a rotatable cutter 10 secured by a blade securin bolt 11, and a fan 8. The rotatable cutter 10 and fan 8 are separated by distance spacers 9 but rotate in unison.

The assembly described above is guided and controlled by an elongate guiding handle 16 which is held by the user.

As can be seen in Figures 2, and 3, the engine support plate 2 carries a braking pad 14 and is biased by springs 13 so that braking pad 14 tends to engage driven pulley 4 (Figure 3). In this connection the belt 6 is slack and transmits little or no drive from pulley 5. In normal use this condition is preventd by a Bowden cable 12 or similar having one end 12A mounted on the handle 16 and the other end 12B attached to slidable engine support plate 2. As shown in Figure 1, when pivoted handle 15 is gripped against handle 16, the Bowden cable 12 pulls slideable the engine support plate 2 to the forward position shown in Figure 2 in which the braking pad 14 is disengaged from pulley 4 and drive belt 6 is tightened sufficiently to transmit drive to the pulley 4 and hence to the fan 8 and rotatable cutter 10. It will be appreciated that the length of the drive belt 6 is calculated such that when the sliding engine support plate 2 is fully returned by the springs 13 to the position shown in figure 3, it is incapable of transmitting power owing to there being insufficient friction between the drive belt and pulleys to overcome the friction created by the braking pad 14 against the driven pulley 4. In this mode, the engine 1 runs at a governed speed without any rotation of the fan 8 or rotary cutter 10, thereby significantly reducing the risk of injury to the user.

Should the rotary cutter 10 hit an immovable object the majority of the shock is taken by the belt 6 and slip between the belt and drive and/or driven pulleys 5,4. Accordingly the most expensive component, namely the engine, is protected.

It will be appreciated that the sliding engine support plate 2 is movable continuously between the positions shown in figure 2 and Figure 3 in dependence upon the position on handle 15 (Figure 1) relative to handle 16. However, in use the handle 15 is either fully gripped against fixed handle 16, thereby rendering the mower operative, or else the handle 15 is released totally, rendering the mower inoperative.

A further feature of the hover mower illustrated is the incorporation of a throttle control (not shown) which may be in the form of a simple mechanical linkage between support plate 3 and engine 1 for example, whereby in the disengaged position shown in Figure 3, the engine is idled at a minimum throttle setting and upon activation of the handle 15 by the user, when rendering the mower operative a full throttle setting is achieved simultaneously.

Accordingly, engine power and torque values can be optimised (by appropriately selecting the drive ratios at the design stage) without employing unduly fast blade speeds. This feature also isolates the engine from excessive shock loads which could be encountered, for example, in the event of the rotary cutter 10 striking a stone or other immovable object in the ground.

Although in the embodiment shown, the coupling between the engine 1 and rotary cutter 10 is in the form of a frictional coupling comprising two pulleys and a drive belt between them, other types of coupling may also be used. Also, it is envisaged that in an alternative embodiment, the engine 1 may be fixed and the driven shaft 11 may be movable to adjust the separation between the two pulleys. In this alternative embodiment relative movement of the pulley's need not be back and forth but could be achieved by means of pivoting at least one of the pullies in an arc about an axis displaced from the centre of the or each pulley. Also it is envisaged the feature of pulley coupled by a drive belt, an axis of one pulley being movable towards the axis of the other and towards a braking pad which engages one of the pulleys when drive belt is slackened may be applicable to cutting devices other than rotary mowers, and indeed, to rotary power transmissions in general.

**Claims**

1. A rotary mower comprising a powered drive shaft, a driven shaft carrying a rotary cutting blade, releasable coupling means arranged to couple the driven shaft to the drive shaft, biasing means acting on the coupling means and tending to disengage the coupling between the drive shaft and drive shaft, and control means coupled to the coupling means so as to enable disengagement thereof to be prevented only when the mower is under the control of the user.

2. A rotary mower as claimed in 1 wherein said biasing means also acts on braking means so as to brake the driven shaft when the coupling means is disengaged.

3. A rotary mower as claimed in claim 1 or claim 2 wherein the drive shaft is coupled to an internal combustion engine and said biasing means also acts on a throttle of the internal combustion engine so as to reduce the speed of the drive shaft to an idling speed as the coupling means moves from an engaged to a disengaged condition and vice versa.

4. A rotary mower as claimed in claim 3 wherein the coupling means is a frictional coupling and comprises a member coupled to the throttle and the normal operable control means which is movable so as to reduce both the speed of the drive shaft and the degree of coupling of the coupling means in dependence upon a release of the manually operable control means.

5. A rotary mower as claimed in claim 4 wherein said frictional coupling comprises two pulleys mounted on the drive shaft and driven shaft respective, a drive belt linking the pulleys, the mounting of one of said shafts being movable towards and away from the axis of the other of said shafts and carrying a braking pad which engages the pulley on said driven shaft when the pulleys are sufficiently close to slacken the drive belt and thereby disengage the coupling.

6. A rotary mower according to claim 5 wherein at least one pulley is mounted for pivotal movement about an axis displaced from the centre of rotation of the pulley.

7. A rotary mower as claimed in any preceding claim wherein the driven shaft has a fixed mounting and the mounting of the drive shaft is movable by the manually operable control means to engage and disengage the coupling means.

8. A rotary mower as claimed in any preceding claim wherein the manually operable control means comprises a handle which in use is normally gripped by the user and is linked to the coupling means by a Bowden cable.

9. A rotary mower according to any preceding claim wherein the control means is manually operable.

10. A rotary mower as claimed in any preceding claim which is a hover mower.

Fig.1.

## Fig.2.

## Fig.3.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 791 079 (FUNK)<br>* Whole document * | 1,2,5,7 | A 01 D 34/76 |
| X | US-A-4 409 779 (BENT)<br>* Whole document * | 1,2,5,6,8,9 | |
| X | US-A-4 186 545 (HUTCHISON)<br>* Whole document * | 1,2,5,6,8,9 | |
| X | US-A-3 943 785 (PERCIFIELD)<br>* Whole document * | 1,2,5 | |
| A | US-A-4 048 788 (KAMLUKIN)<br>* Whole document * | 1,2,6,8,9 | |
| A | US-A-4 565 268 (YAMAMOTO)<br>* Whole document * | 3,4,9,10 | |
| A | US-A-4 290 256 (SEIFERT)<br>* Whole document * | 3,4,8,9 | |
| A | US-A-4 277 936 (HOFF)<br>* Whole document * | 3,4,8,9 | TECHNICAL FIELDS SEARCHED (Int. Cl.4)<br><br>A 01 D |
| A | US-A-4 309 862 (CARLSON)<br>* Whole document * | 3,4,8,9 | |
| A | US-A-4 696 150 (GEECK) | | |
| A | US-A-4 221 108 (OWENS) | | |
| A | US-A-4 148 173 (HOFF) | | |
| A | FR-A-2 512 323 (WOLF) | | |
| A | EP-A-0 080 255 (TECUMSEH PRODUCTS CO.)<br>-/- | | |

The present search report has been drawn up for all claims

| Place of search | Date of completion of the search | Examiner |
|---|---|---|
| THE HAGUE | 20-02-1989 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 102 901 (OUTBORD MARINE) --- | | |
| A | FR-A-2 538 994 (WOLF) ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 20-02-1989 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                             
& : member of the same patent family, corresponding document

EPO FORM 1503 03.82 (P0401)